# EUROPEAN PATENT APPLICATION

(11) **EP 3 358 491 A1**
(43) Date of publication of application: **08.08.2018**
(21) Application number: 15905461.8
(22) Date of filing: 02.10.2015
(51) Int. Cl.: G06F 21/70

(54) **MPU PROTECTION DEVICE**

(71) Applicant: DNP Hypertech Co. Ltd., Kyoto-shi, Kyoto 600-8813 (JP)
(72) Inventor: OGAWA, Hideaki, Kyoto-shi Kyoto 600-8813 (JP)
(74) Representative: Erhardt, Martin
(86) International application number: PCT/JP2015/078011
(87) International publication number: WO 2017/056308

(57) **Abstract**

[Problem] To provide a technology capable of even preventing unauthorized access not using a debug terminal. [Solution] The present invention is an MPU protection device developed having: a reference waveform holding unit that holds power supply waveform data of an MPU as a reference; an in-use power supply waveform acquisition unit that acquires an in-use power supply waveform being a power supply waveform when using the MPU; a comparison unit that compares the sameness between the acquired in-use power supply waveform and the held reference waveform; a reference holding unit that holds a reference to be determined as having an identity and/or not having an identity; and an MPU operation stopping unit for stopping at least a part of an MPU operation if comparison results by the comparison unit using the held reference have determined that there is no sameness between both waveforms.

## Description

### Technical Field

The present invention relates to an MPU protection device having features in comparison of waveforms.

### Background Art

In general, a technology for preventing information from leaking upon receiving unauthorized access to a computer is known. The information that is liable to be leaked includes information having high secrecy such as personal information and a trade secret. Therefore, a necessity for advancement of the technology for preventing the information from leaking is high.

As a method of the unauthorized access to the computer, specific examples thereof generally include a method of reading a signal by bringing a needle used for the unauthorized access into direct contact with a pin terminal of an MPU.

As the technology for preventing the information from leaking upon receiving the unauthorized access by such a method, specific examples thereof include the technology described in Patent Literature 1.

### Citation List

### Patent Literature

Patent Literature 1: JP 2012-79152 A

### Summary of Invention

### Technical Problem

In order to prevent unauthorized access after factory shipping, Patent Literature discloses a technology of invalidating a debug terminal of a semiconductor device, upon factory shipping, by using a program outside a device, called a "validation routine" according to which validity of the debug terminal can be controlled.

However, the Patent Literature has a content limited to prevention of the unauthorized access using the debug terminal, in which a problem of vulnerability to unauthorized access without using the debug terminal has remained.

Then, an objective of the present invention is to provide a technology according to which even the unauthorized access without using the debug terminal can be prevented.

### Solution to Problem

In order to achieve the objective described above, the present invention provides an MPU protection device developed, having: a reference waveform holding unit that holds power supply waveform data of an MPU as a reference; an in-use power supply waveform acquisition unit that acquires an in-use power supply waveform being a power supply waveform when using the MPU; a comparison unit that compares identity between the acquired in-use power supply waveform and the held reference waveform; a reference holding unit that holds a reference for determining both to have identity and/or non-identity; and an MPU operation stopping unit for stopping at least a part of MPU operation when both waveforms are determined to have non-identity in comparison results using the held reference in the comparison unit. According to the device, even unauthorized access without using a debug terminal can be prevented. Thus, distribution of information having high secrecy such as personal information and a trade secret can be prevented.

Moreover, the present invention further provides, in addition to the feature described above, the MPU protection device developed, wherein the comparison unit has a spectrum comparison means for comparing the identity by spectrum comparison. Thus, the unauthorized access can be appropriately found out for noise or the like in which a change easily appears in a spectrum.

Moreover, the present invention further provides, in addition to the feature described above, the MPU protection device developed, wherein the comparison unit has a majority comparison means for comparing the identity by a majority of plural times of comparison results. Thus, erroneous determination of deeming a change in the waveform without depending on the unauthorized access as a change by the unauthorized access can be reduced, and presence or absence of the unauthorized access can be determined with higher accuracy.

Moreover, the present invention further provides, in addition to the feature described above, the MPU protection device developed, wherein the reference waveform holding unit has a reference amplitude data holding means for holding reference amplitude data being amplitude data of a current or a voltage as the power supply waveform data of the MPU, and the in-use power supply waveform acquisition unit has an in-use amplitude data acquisition means for acquiring in-use amplitude waveform data being the amplitude data of the current or the voltage when using the MPU as the power supply waveform data when using the MPU, and the comparison unit has an amplitude data comparison means for comparing the in-use amplitude data with the reference amplitude data. Thus, the unauthorized access influencing the power supply waveform in a form other than the noise can also be counteracted.

Moreover, the present invention further provides, in addition to the feature described above, the MPU protection device developed, further having a non-normal operation unit that allows the MPU to intentionally perform wrong operation and/or dummy operation after stopping in the MPU operation stopping unit when both waveforms are determined to have non-identity in the comparison results using the held reference in the comparison unit. Thus, a certain level of damage can be caused to a person who commits unauthorized access, leading to suppression of committing such unauthorized access.

Moreover, the present invention further provides, in addition to the feature described above, the MPU protection device developed, wherein the reference waveform is a waveform of electronic equipment including the MPU upon factory shipping thereof. Thus, the waveform in a state without unauthorized access can be held as the reference.

Moreover, the present invention further provides, in addition to the feature described above, the MPU protection device developed, wherein the reference waveform is a waveform of electronic equipment including the MPU during start of use thereof. Thus, the waveform in a state of having a significantly low possibility of receiving the unauthorized access can be held as the reference.

Moreover, the present invention further provides, in addition to the feature described above, the MPU protection device developed, wherein a signal waveform of the MPU is applied in addition to the power supply waveform or in place of the power supply waveform. Thus, if a clock frequency signal waveform is used, for example, such unauthorized access as influencing a frequency can be reliably found out.

Moreover, the present invention further provides electronic equipment equipped with the MPU protection device having the feature developed. Thus, the electronic equipment having a function for preventing even the unauthorized access without using the debug terminal can be provided.

Meanwhile, the present invention provides an MPU protection method developed, in which a method of operating the MPU protection device has: a reference waveform holding unit that holds power supply waveform data of an MPU as a reference; and a reference holding unit that holds the reference for determining both to have identity and/or non-identity between an in-use power supply waveform being a power supply waveform when using the MPU as described later and the held reference waveform, and the method has an in-use power supply waveform acquisition step of acquiring the in-use power supply waveform being the power supply waveform when using the MPU; a comparison step of comparing the identity between the in-use power supply waveform acquired in the in-use power supply waveform acquisition step and the held reference waveform; and an MPU operation stopping step of stopping at least a part of MPU operation when both waveforms are determined to have non-identity in comparison results using the held reference in the comparison step. According to the method, even the unauthorized access without using the debug terminal can be prevented. Thus, distribution of the information having high secrecy such as the personal information and the trade secret can be prevented.

Moreover, the present invention further provides, in addition to the feature described above, the MPU protection method developed, wherein the comparison step has a spectrum comparison means for comparing the identity by spectrum comparison. Thus, the unauthorized access can be appropriately found out for the noise or the like in which the change easily appears in the spectrum.

Moreover, the present invention further provides, in addition to the feature described above, the MPU protection method developed, wherein the comparison step has a majority comparison means for comparing the identity by a majority of plural times of comparison results. Thus, the erroneous determination of deeming the change in the waveform without depending on the unauthorized access as the change by the unauthorized access can be reduced, and presence or absence of the unauthorized access can be determined with higher accuracy.

Moreover, the present invention further provides, in addition to the feature described above, the MPU protection method developed, wherein the reference waveform holding unit has a reference amplitude data holding means for holding reference amplitude data being amplitude data of a current or a voltage as power supply waveform data of the MPU, and the in-use power supply waveform acquisition step has an in-use amplitude data acquisition means for acquiring in-use amplitude waveform data being the amplitude data of the current or the voltage when using the MPU as the power supply waveform data when using the MPU, and the comparison step has an amplitude data comparison means for comparing the in-use amplitude data with the reference amplitude data. Thus, the unauthorized access influencing the power supply waveform in the form other than the noise can also be counteracted.

Moreover, the present invention further provides, in addition to the feature described above, the MPU protection method developed, further having a non-normal operation step of allowing the MPU to intentionally perform wrong operation and/or dummy operation after stopping in the MPU operation stopping step when both waveforms are determined to have non-identity in the comparison results using the held reference in the comparison unit. Thus, a certain level of damage can be caused to the person who commits the unauthorized access, leading to suppression of committing such unauthorized access.

Moreover, the present invention further provides, in addition to the feature described above, the MPU protection method developed, wherein the reference waveform is a waveform of electronic equipment including the MPU upon factory shipping thereof. Thus, the waveform in the state without unauthorized access can be held as the reference.

Moreover, the present invention further provides, in addition to the feature described above, the MPU protection method developed, wherein the reference waveform is a waveform of electronic equipment including the MPU during start of first use after purchase thereof . Thus, the waveform in the state of having the significantly low possibility of receiving the unauthorized access can be held as the reference.

Moreover, the present invention further provides, in addition to the feature described above, the MPU protection method developed, wherein a signal waveform of the MPU is applied in addition to the power supply waveform or in place of the power supply waveform. Thus, if the clock frequency signal waveform is used, for example, such unauthorized access as influencing the frequency can be reliably found out.

Moreover, the present invention provides a protection method for electronic equipment, using the MPU protection method having the feature developed. Thus, the electronic equipment that is liable to receive the unauthorized access without using the debug terminal can be protected.

### Advantageous Effects of Invention

According to the present invention described above, even unauthorized access without using a debug terminal can be prevented.

### Brief Description of Drawings

Figure 1 is a diagram showing one example of a functional block of an MPU protection device according to Example 1.
Figure 2 is a diagram showing an example of a reference waveform held in a reference waveform holding unit.
Figure 3 is a diagram showing an example of an in-use power supply waveform acquired in an in-use power supply waveform acquisition unit.
Figure 4 is a diagram 1 showing an application relationship of a reference held by a reference holding unit.
Figure 5 is a diagram 2 showing an application relationship of a reference held by a reference holding unit.
Figure 6 is a schematic diagram showing one example of a configuration in an MPU protection device upon realizing an art in Example 1 as hardware.
Figure 7 is a flow chart showing one example of a flow of processing in the MPU protection device in Example 1.
Figure 8 is a diagram showing one example of a functional block of the MPU protection device in Example 2.
Figure 9 is a diagram showing a content of spectrum comparison.
Figure 10 is a schematic diagram showing one example of a configuration in an MPU protection device upon realizing an art in Example 2 as hardware.
Figure 11 is a flow chart showing one example of a flow of processing in the MPU protection device in Example 2.
Figure 12 is a diagram showing one example of a functional block of the MPU protection device in Example 3.
Figure 13 is a diagram showing a content of majority comparison.
Figure 14 is a schematic diagram showing one example of a configuration in an MPU protection device upon realizing an art in Example 3 as hardware.
Figure 15 is a flow chart showing one example of a flow of processing in the MPU protection device in Example 3.
Figure 16 is a diagram showing one example of a functional block of the MPU protection device in Example 4.
Figure 17 is a diagram showing a content of amplitude data and comparison results in Example 4.
Figure 18 is a schematic diagram showing one example of a configuration in an MPU protection device upon realizing an art in Example 4 as hardware.
Figure 19 is a flow chart showing one example of a flow of processing in the MPU protection device in Example 4.
Figure 20 is a diagram showing one example of a functional block of an MPU protection device when the present invention is practiced by a signal waveform.
Figure 21 is a schematic diagram showing one example of a configuration in an MPU protection device upon realizing an art in Example 5 as hardware.
Figure 22 is a flow chart showing one example of a flow of processing in the MPU protection device in Example 5.
Figure 23 is a diagram showing one example of a functional block of the MPU protection device in Example 6.
Figure 24 is a schematic diagram showing one example of a configuration in an MPU protection device upon realizing an art in Example 6 as hardware.
Figure 25 is a flow chart showing one example of a flow of processing in the MPU protection device in Example 6.

### Description of Embodiments

Hereinafter, embodiments according to the present invention will be described by using drawings. In the following description, Example 1 corresponds to claims 1, 6, 7, 10, 15 and 16, Example 2 corresponds to claims 2 and 11, Example 3 corresponds to claims 3 and 12, Example 4 corresponds to claims 4 and 13, Example 5 corresponds to claims 5 and 14, Example 6 corresponds to claims 8 and 17, and Example 7 corresponds to claims 9 and 18, respectively. In addition, a content of the present invention is not limited only to the following Examples, and various variations may be made within the scope without departing from the spirit.

### Example 1

### Outline

A device according to the present example is an MPU protection device having: a reference waveform holding unit that holds power supply waveform data of an MPU as a reference; an in-use power supply waveform acquisition unit that acquires an in-use power supply waveform being a power supply waveform when using the MPU; a comparison unit that compares identity between the acquired in-use power supply waveform and the held reference waveform; a reference holding unit that holds a reference for determining both to have identity and/or non-identity; and an MPU operation stopping unit for stopping at least a part of MPU operation when both waveforms are determined to have non-identity in comparison results using the held reference in the comparison unit.

As described above, as a method of unauthorized access to a computer, specific example thereof generally include a method of reading a signal by bringing a needle used for the unauthorized access into direct contact with a pin terminal of an MPU. When the unauthorized access is committed by such a method, the power supply waveform inevitably has any influence during the contact.

The device according to the present example has been developed for the purpose of finding out a change in the power supply waveform and taking measures for preventing the unauthorized access. According to the device, even the unauthorized access without using a debug terminal can be prevented. Thus, distribution of information having high secrecy such as personal information and a trade secret can be prevented.

Hereinafter, a function of the device and a content of hardware, and a flow of processing according to the present example will be described in detail.

### Functional configuration

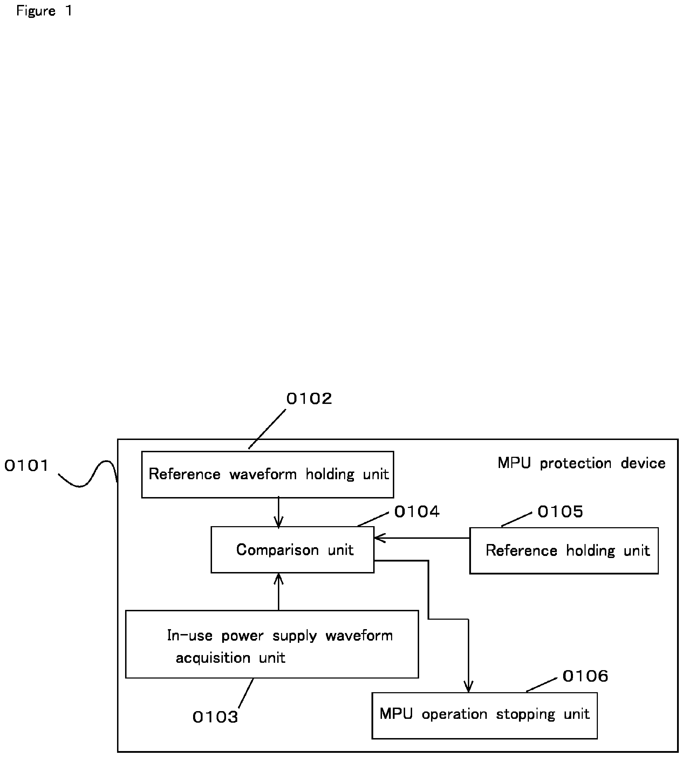

Figure 1 is a diagram showing one example of a functional block in the MPU protection device according to the present example. As shown in the figure, an MPU protection device (0101) in the present example has a reference waveform holding unit (0102), an in-use power supply waveform acquisition unit (0103), a comparison unit (0104), a reference holding unit (0105) and an MPU operation stopping unit (0106).

In addition, the functional block of each unit constituting the present device as described below may be realized as hardware, software or both the hardware and the software. Specific examples thereof include, if the unit uses a computer, a hardware configuration unit such as a CPU, a main memory, a bus or a secondary storage (storage media such as a hard disk, a nonvolatile memory, a CD-ROM and a DVD-ROM, and a reading drive of the media), a printer, a display device and other external peripheral devices, an I/O port for the external peripheral device, a driver program and other application programs for controlling the hardware, and a user interface used for information input.

Moreover, such hardware and software are utilized for performing operation processing of the program developed on the main memory in the CPU, or processing, accumulating or performing output processing of data held on the memory or the hard disk, or data input through an interface, or controlling each hardware configuration unit. Moreover, the present invention can be realized not only as the device but also as the method. Moreover, a part of such an invention can be configured as the software. Further, a software product used for allowing the computer to execute such software, and a storage medium to which the same product is fixed are also obviously included in the technical scope of the present invention (a same rule also applies thereto throughout the whole of the present description).

### Functioning of the reference waveform holding unit, the in-use power supply waveform acquisition unit and the comparison unit

The device according to the present example needs to have a function for finding out a change to the power supply waveform as information for determining presence or absence of the unauthorized access.

In general, in order to find out the change, information during normal time needs to be compared with information at real time. The reason is that, if the information at real time has identity with the information during normal time, the waveform is taken as "having no change", and if the information at real time has non-identity with the information during normal time, the waveform is taken as "having a change".

If the description described above is adapted to the device according to the present invention, the information is in a relation in which the information during normal time is the "reference waveform", and the information at real time is the "in-use power supply waveform". Then, the change in the waveform is found out by comparing both the waveform information in the "comparison unit" and so forth. The "reference waveform holding unit", the "in-use power supply waveform acquisition unit" and the "comparison unit" will be described on the premise described above.

The "reference waveform holding unit" has a function of holding the power supply waveform data of the MPU as the reference. The "MPU" herein means a so-called microprocessor, including the CPU and the GPU. The function is realized by the HDD, the DVD, the CD, the nonvolatile memory or the like, for example.

Unless there are power supply waveform data of the MPU in a state without unauthorized access, the change in the power supply waveform is unable to be found out by the comparison. Therefore, the information held herein serves as indispensable information upon comparison in the comparison unit described later.

An input method for the reference power supply waveform data of the MPU may be a method in which the power supply waveform data is directly acquired from a power supply line of the MPU before factory shipping or immediately after power-up, or if the power supply waveform to be originally held by the MPU can be grasped, the power supply waveform data may be directly recorded in the holding unit as data or a function.

Moreover, the reference power supply waveform data of the MPU may be supplied in the form of a graph showing a current or voltage value along elapse of time, data showing ranges of an upper limit and a lower limit of the current or voltage value, data of a spectrum of the waveform as described later, or further a signal waveform such as a clock waveform to be supplied in place of the power supply waveform, for example.

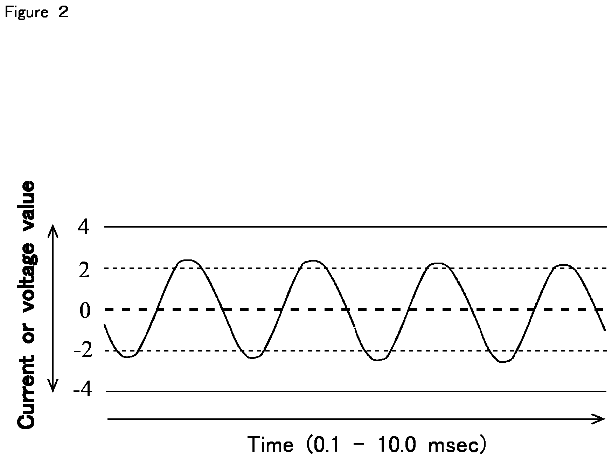

Figure 2 is a diagram showing one example of the held reference waveform. The figure is the graph showing the current or voltage value along elapse of time. A horizontal axis represents a time and a vertical axis represents a current or voltage value. The reference is in the state without unauthorized access, and therefore the graph stably shows an identical waveform for each fixed cycle.

The "in-use power supply waveform acquisition unit" has a function of acquiring the in-use power supply waveform being the power supply waveform when using the MPU. The function can be realized by preliminarily setting a circuit for acquiring the waveform on a printed circuit board.

A place from which the in-use power supply waveform is acquired may be a portion from which power is supplied to the MPU, a power supply circuit common with the CPU, or any other places. However, the place from which the in-use power supply waveform is acquired is desirably a place sensitively influenced when the unauthorized access occurs. Therefore, the place is most preferably the portion from which the power is supplied to the MPU, being the portion having the highest sensitivity.

With regard to timing of acquiring the in-use power supply waveform, the waveform may be acquired constantly or intermittently. However, in view of difficulty in predicting the timing at which the unauthorized access is committed, the waveform is desirably acquired at the timing at which the unauthorized access at any time point can be found out. When the waveform is constantly acquired, the unauthorized access at any time point can be found out. Therefore, with regard to the timing of acquiring the in-use power supply waveform, the waveform is desirably acquired constantly.

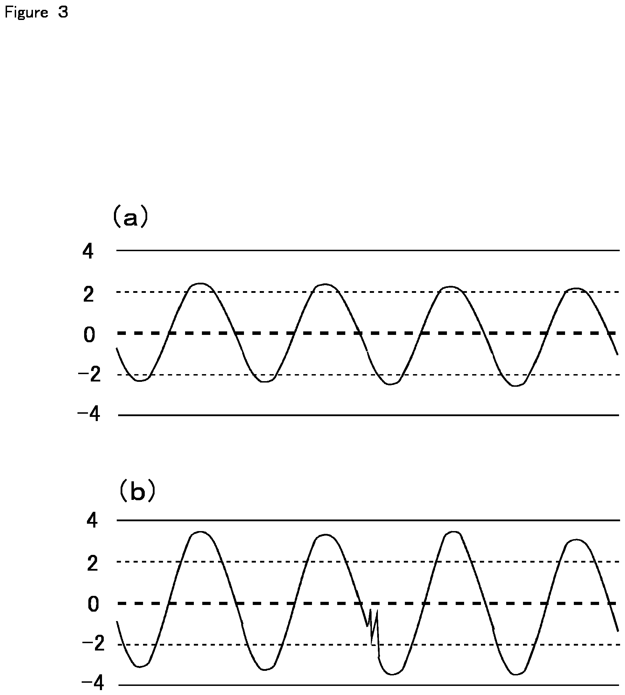

Figure 3 is a diagram showing examples of two acquired in-use power supply waveforms. Figure 3A shows a case where no noise is generated in the in-use power supply waveform. Figure 3B shows a case where noise is generated in the in-use power supply waveform.

The "comparison unit" has a function of comparing the identity between the acquired in-use power supply waveform and the held reference waveform. According to the function, a difference between the in-use power supply waveform and the reference waveform can be found out.

As described above, when the unauthorized access is committed by the method of reading the signal by bringing the needle used for the unauthorized access into direct contact with the pin terminal of the MPU, the power supply waveform inevitably has any influence during the contact. Therefore, if the unauthorized access should occur, an acquired power supply waveform should cause a difference from the reference waveform. A case where the noise is generated as in Figure 3B should have a doubt of occurrence by the influence of the unauthorized access.

The MPU protection device according to the present invention should have the function for finding out the change to the power supply waveform by having the "reference waveform holding unit", the "in-use power supply waveform acquisition unit" and the "comparison unit" each having the function as described above.

### Functioning of the reference holding unit and the MPU operation stopping unit

When the change to the power supply waveform is found out by the functions of the "reference waveform holding unit", the "in-use power supply waveform acquisition unit" and the "comparison unit", the MPU protection device needs to have a function for freeing the MPU from the unauthorized access for protecting the MPU.

In general, when acquired information is linked with predetermined operation, as the premise, whether or not the predetermined operation is performed needs to be determined. When the premise is adapted to the MPU protection device, whether or not the "change to the power supply waveform" is caused by the influence by the unauthorized access needs to be determined. The reason is that various influences such as exogenous noise are considered for the change in the power supply waveform in addition to the influence by the unauthorized access, and only the influence by the unauthorized access needs to be definitely determined.

If the description described above is adapted to the MPU protection device according to the present invention, a unit holding the reference for determining whether or not the change is influenced by the unauthorized access, more specifically, whether or not the predetermined operation is to be performed is the "reference holding unit", and a unit in which the predetermined operation is performed is positioned as the "MPU operation stopping unit". The "reference holding unit" and the "MPU operation stopping unit" will be described based on the premises described above.

The "reference holding unit" has a function of holding the reference for determining both to have identity and/or non-identity. The function is realized by the HDD, the DVD, the CD, the nonvolatile memory or the like, for example. According to the function, as a result of the comparison in the comparison unit, a case where the change in the power supply waveform is influenced by the unauthorized access to the MPU and a case where the change is not influenced by the unauthorized access to the MPU can be differentiated.

As a content of the reference to be held, such a reference can be considered as a reference (1) in which both are determined to have non-identity when a rise or fall of center potential takes place at a predetermined proportion or more in comparison with the reference, a reference (2) in which the waveforms are determined to have non-identity when distortion of the waveform takes place at a predetermined proportion or more in an area ratio in comparison with the reference, and a reference (3) in which both are determined to have non-identity when a change in a part of spectrum takes place at a predetermined proportion or more in comparison with the reference, for one second or more for all.

Specifically, the predetermined proportion herein is desirably ±10% when the determination depends on the references (1) and (2), and on the other hand, the predetermined proportion is desirably ±30% when the determination depends on the reference (3).

For example, when the determination depends on the reference (1), presence or absence of the unauthorized access can be appropriately determined for such a change in which the whole of power supply waveform data rises or falls. Moreover, when the determination depends on the reference (2), presence or absence of the unauthorized access can be appropriately determined for such a change in which an amplitude between the upper limit and the lower limit is expanded or reduced in comparison with the reference while the center potential has no change. Further, when the determination depends on the reference (3), presence or absence of the unauthorized access can be appropriately definitely determined for the noise or the like in which the change easily appears in the spectrum.

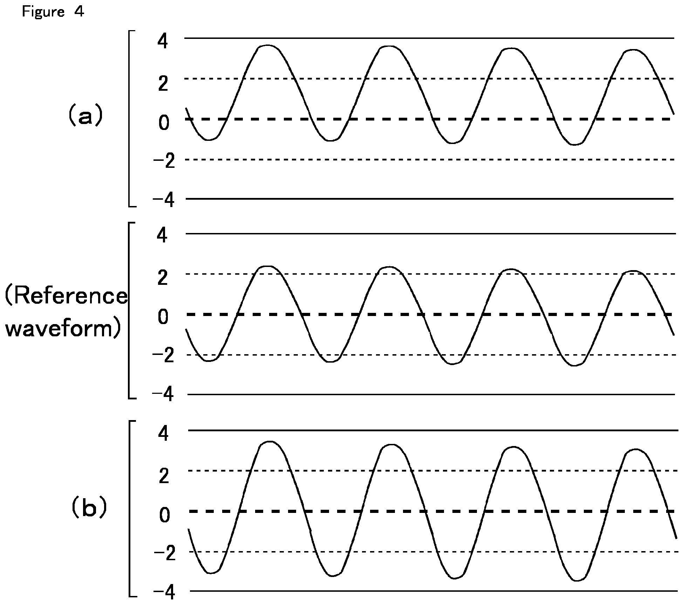

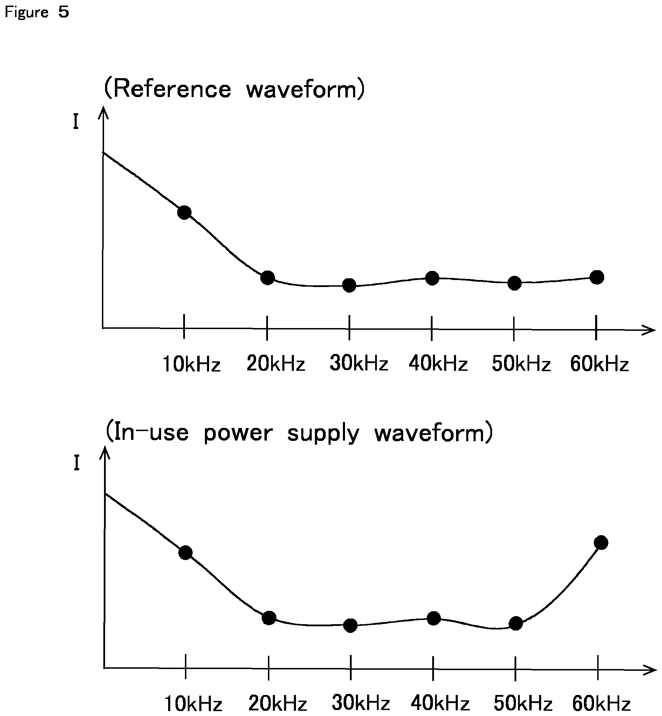

Figures 4 and 5 each are a diagram showing an application relationship of the reference held by the reference holding unit. In Figure 4, Figure 4A shows a case when the determination depends on the reference (1), and Figure 4B shows a case when the determination depends on the reference (2). Figure 5 shows a case when the determination depends on the reference (3).

While the potential in the reference waveform oscillates between the vicinity of "2" as an upper limit and the vicinity of "-2" as a lower limit, with the vicinity of "0" as the center potential, Figure 4A shows that the potential in the power supply waveform data oscillates between the vicinity of "3" as the upper limit and the vicinity of "-1" as the lower limit, with the vicinity of "1" as the center potential, in which the potential is known to rise as a whole. If the rise rate is in a predetermined proportion or more, both are determined to have non-identity. A same rule applies also to a case where the whole of the power supply waveform data falls in comparison with the reference.

While the potential in the reference waveform oscillates between the vicinity of "2" as an upper limit and the vicinity of "-2" as a lower limit, with the vicinity of "0" as the center potential, Figure 4B shows that the potential in the power supply waveform data oscillates between the vicinity of "3" as the upper limit and the vicinity of "-3" as the lower limit, while the center potential is in the vicinity of "0" and has no change, in which the amplitude between the upper limit and the lower limit is expanded in comparison with the reference. If the expansion is in a predetermined proportion or more in an area ratio, both are determined to have non-identity. A same rule applies also to a case where the amplitude between the upper limit and the lower limit is reduced in comparison with the reference while the center potential has no change.

In Figure 5, a horizontal axis represents a frequency and a vertical axis represents intensity. In Figure 5, a spectrum at "60 kHz" is increased in comparison with the reference. If the value is in a predetermined proportion or more in comparison with the reference, both are determined to have non-identity. A same rule applies also to a case where the spectrum is decreased in comparison with the reference. In addition, a target frequency for spectrum comparison may be several kHz to several hundreds of MHz, and the numerical value in Figure 5 does not limit the scope of the present invention.

The "MPU operation stopping unit" has a function of stopping at least a part of MPU operation when both waveforms are determined to have non-identity in comparison results using the held reference in the comparison unit. Specifically, the unit has a function of stopping at least a part of a program counter or data register of the MPU as a protection object. According to the function, when the unauthorized access is caused to the MPU, information leak by the unauthorized access can be blocked to protect the MPU.

The MPU protection device according to the present invention should have the function for freeing the MPU from the unauthorized access when the change to the power supply waveform is found out by having the "reference holding unit" and the "MPU operation stopping unit" each having the function as described above.

### Summary

Even the unauthorized access without using the debug terminal can be prevented by having the functions as described above.

### Hardware configuration

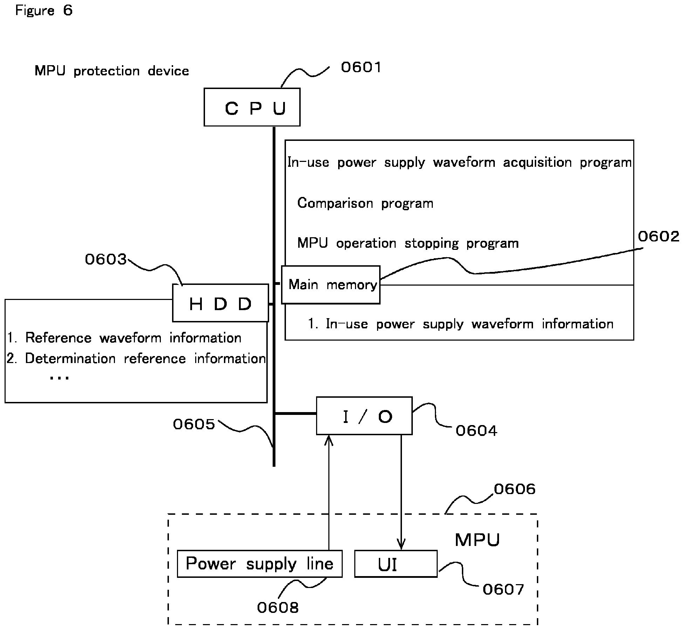

Figure 6 is a schematic diagram showing one example of a configuration in an MPU protection device upon realizing each functional component described above as hardware. Functioning of each hardware configuration unit in each processing in the present device will be described by using the figure.

As shown in the figure, the MPU protection device in the present example has a "CPU (central processing unit)" (0601) for performing various operation processing, and a "main memory" (0602) . Moreover, the device also has an "HDD" (0603) for holding reference waveform information, and determination reference information on presence or absence of the identity between the in-use power supply waveform and the reference waveform, and also an "I/O (input/output)" (0604) for acquiring in-use power supply waveform information from a "power supply line" of an MPU body, or transmitting an OFF signal to the MPU body when both are determined to have non-identity therebetween. Then, the elements are interconnected by a data communication channel such as a "system bus" (0605) to transmit and receive or process the information.

Moreover, the "main memory" causes reading of a program according to which various processing are performed in order to allow the "CPU" to execute the program, and simultaneously provides a work area being also a working area of the program. Moreover, a plurality of addresses are assigned to the "main memory", the "HDD" and the "flash memory", respectively, and in the program executed in the "CPU", data can be exchanged with each other and processed by specifying the address and accessing thereto.

In the "I/O (input/output)" (0604) of the MPU protection device, the in-use power supply waveform information is acquired from a "power supply line" (0608) of an MPU (0606) being a protection object. Then, in the MPU protection device, the in-use power supply waveform information is stored in the address in the "main memory".

Then, in the "CPU", the acquired in-use power supply waveform is compared with the reference waveform preliminarily held in the "HDD", presence or absence of the identity is determined by using a determination reference preliminarily held in the "HDD", and if both are determined to have non-identity, the OFF signal is transmitted to a "UI" (0607) of the MPU (0606) by logic operation processing in the "CPU", and so forth.

In the MPU (0606), if the OFF signal is received, a part or whole of supply of a power supply signal is stopped.

### Flow of processing

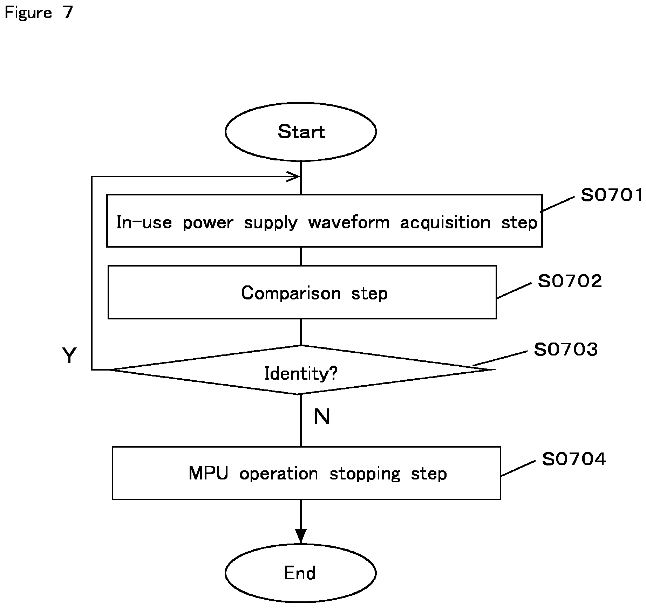

Figure 7 is a flow chart showing one example of a flow of processing in the MPU protection device according to the present example. In addition, steps shown below may be processing steps constituting a program which is recorded in a medium and applied for controlling a computer. Moreover, the MPU protection device used for the processing is provided on the premise of having the reference waveform holding unit that holds the power supply waveform data of the MPU as the reference, and the reference holding unit that holds the reference for determining both to have identity and/or non-identity between the in-use power supply waveform being the power supply waveform when using the MPU as described later and the held reference waveform. Then, features of the "reference waveform holding unit" and the "reference holding unit" are as described in the description of the functional configuration as described above.

As shown in the figure, first, in-use power supply waveform being power supply waveform when using an MPU is acquired (S0701). Next, identity between the acquired in-use power supply waveform and a held reference waveform is compared (S0702). Then, when both waveforms are determined to have non-identity in comparison results using a held reference (S0703), at least a part of MPU operation is stopped (S0704) . On the other hand, when both waveforms are determined to have identity in the comparison results using the held reference (S0703), the processing returns to the step of acquiring the in-use power supply waveform being the power supply waveform when using the MPU (S0701).

In addition, as described above, the held reference waveform may be the power supply waveform of electronic equipment including the MPU upon factory shipping thereof, or may be the waveform of the electronic equipment including the MPU during start of first use after purchase thereof.

According to the steps described above, even the unauthorized access without using the debug terminal can be prevented.

### Example 2

### Outline

As a further desirable embodiment, the present example provides, based on Example 1, an MPU protection device, wherein the comparison unit has a spectrum comparison means for comparing identity by spectrum comparison.

Hereinafter, a function of the device and a content of hardware, and a flow of processing according to the present example will be described in detail.

### Functional configuration

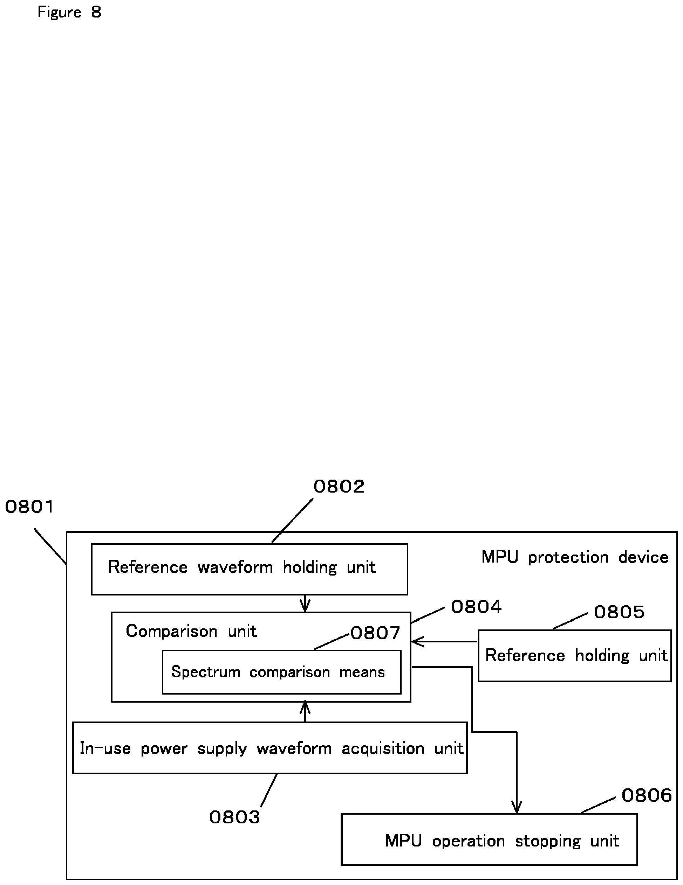

Figure 8 is a diagram showing one example of a functional block of the MPU protection device according to the present example. As shown in the figure, an MPU protection device (0801) in the present example has a reference waveform holding unit (0802), an in-use power supply waveform acquisition unit (0803), a comparison unit (0804), a reference holding unit (0805) and an MPU operation stopping unit (0806). Features of the present example are in a content of the comparison unit. Then, as the premise thereof, the features are also in a content of a waveform being a comparison object. Therefore, the present example will be described, centering on the content of the waveform and the functional configuration of the comparison unit. In addition, the reference holding unit and the MPU operation stopping unit are similar to the units already described in Example 1, and therefore the description thereon is omitted.

The "reference waveform holding unit" has a function of holding power supply waveform data of the MPU as a reference. The "in-use power supply waveform acquisition unit" has a function of acquiring an in-use power supply waveform being a power supply waveform when using the MPU. The power supply waveform data herein is waveform spectrum data for both the in-use power supply waveform data and the power supply waveform data held as the reference.

The "comparison unit" (0804) has a function of comparing identity between the acquired in-use power supply waveform and the held reference waveform. Then, in the present example, the "comparison unit" has a spectrum comparison means (0807). The "spectrum comparison means" means a function of comparing the identity between the acquired in-use power supply waveform and the held reference waveform by spectrum comparison.

As described above, if unauthorized access should occur, an acquired power supply waveform should cause a difference from the reference waveform. When the difference is caused by a change as noise, the difference becomes clear by comparing spectra.

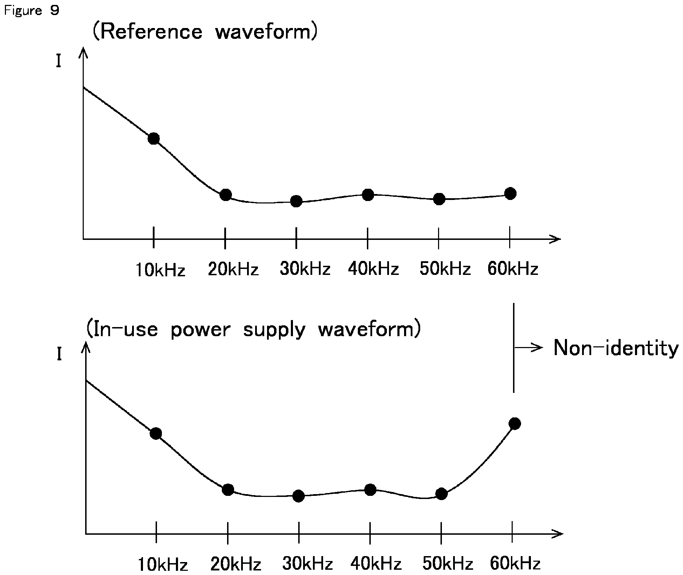

Figure 9 is a diagram showing a content of spectrum comparison. Figure 9A shows a spectrum on a reference waveform, and Figure 9B shows a spectrum on an in-use power supply waveform. The spectrum on the in-use power supply waveform shows that intensity at a frequency of 60 kHz is significantly increased in comparison with the spectrum on the reference waveform. Presence of the unauthorized access can be found out by occurrence of such a change.

The unauthorized access can be appropriately found out for the noise or the like in which the change easily appears in the spectrum by having the function as described above.

### Hardware configuration

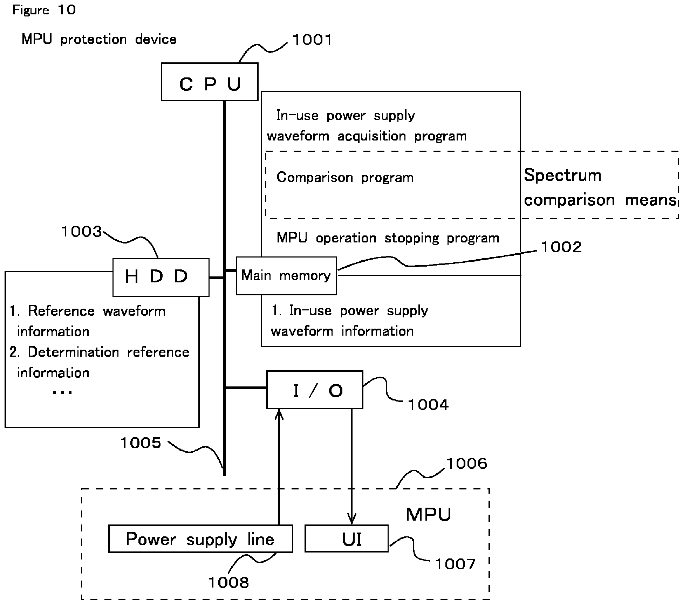

Figure 10 is a schematic diagram showing one example of a configuration in an MPU protection device upon realizing each functional component described above as hardware. The MPU protection device has a "CPU (central processing unit)" (1001), a "main memory" (1002), an "HDD" (1003), an "I/O (input/output)" (1004) and a "system bus" (1005), and an "MPU" (1006) being a protection object has a "UI" (1007) and a "power supply line" (1008).

Characteristic portions in Example 2 in each hardware configuration unit in each processing in the present device will be described by using the figure, and other portions are described in the same manner as in Example 1.

In the MPU protection device according to the present example, a comparison program has a spectrum comparison means as a content of the comparison program stored in the "main memory" (1002).

Therefore, a content of comparison in the "CPU" (1001) should be spectrum comparison. Moreover, reference waveform information held in the "HDD" (1003) of the MPU protection device and in-use power supply waveform information acquired in the "I/O (input/output)" (1004) and stored in the main memory should be the waveform spectrum data for both.

### Flow of processing

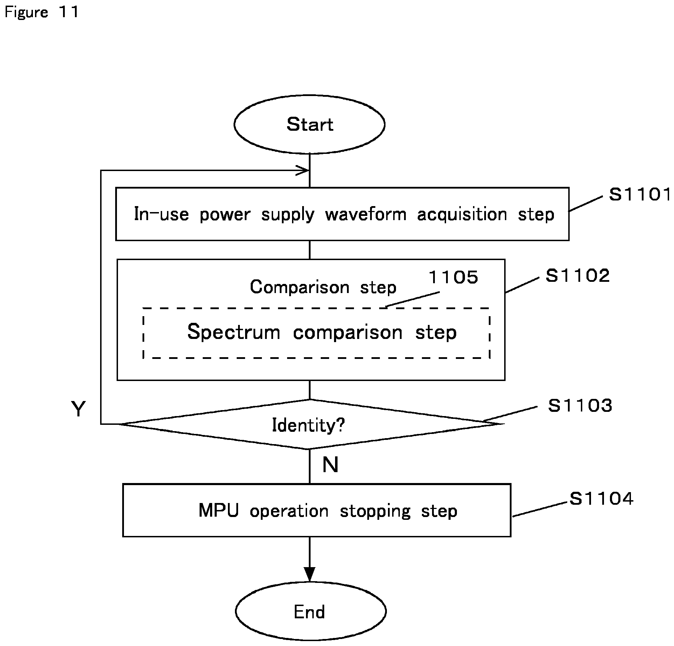

Figure 11 is a flow chart showing one example of a flow of processing in the MPU protection device according to the present example. The processing has an in-use power supply acquisition step (S1101), a comparison step (S1102), confirmation of presence or absence of identity (S1103) and an MPU operation stopping step (S1104). Characteristic portions in Example 2 in the flow of each processing in the present device will be described by using the figure, and other portions are described in the same manner as in Example 1.

The comparison step in the present example has a spectrum comparison step. The "spectrum comparison step" means a step of comparing identity between the acquired in-use power supply waveform and the held reference waveform by the spectrum comparison.

As the premise of comparing the identity by the spectrum in the comparison step, waveform information held in the reference waveform holding unit of the MPU protection device should be the waveform spectrum data, and the waveform information acquired in the in-use power supply acquisition step (S1101) also should be the waveform spectrum data.

Thus, the unauthorized access can be appropriately found out for the noise or the like in which the change easily appears in the spectrum.

### Example 3

### Outline

The present invention provides, in addition to the features in Examples 1 and 2, an MPU protection device, wherein the comparison unit has a majority comparison means for comparing identity by a majority of plural times of comparison results.

Hereinafter, a function of the device and a content of hardware, and a flow of processing according to the present example will be described in detail.

### Functional configuration

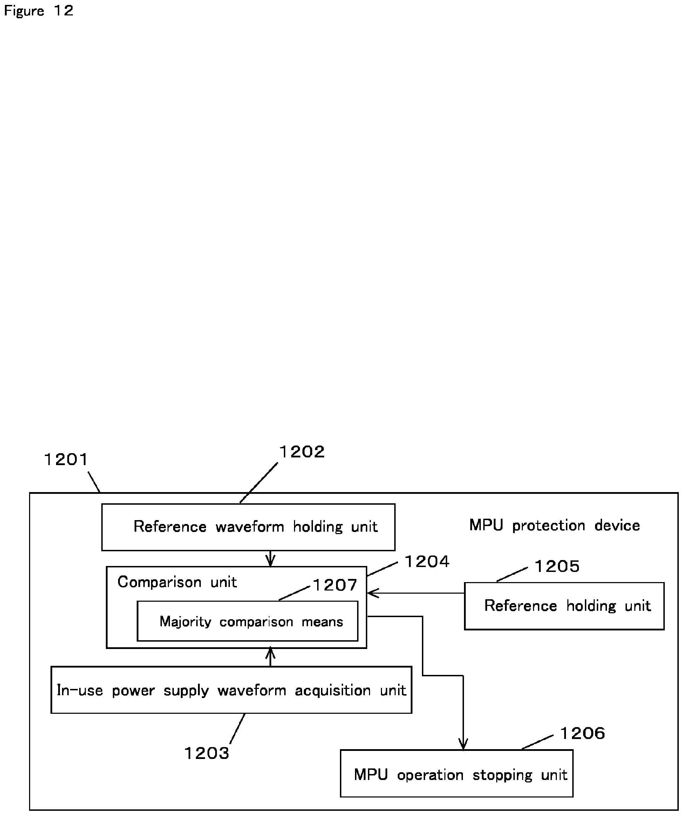

Figure 12 is a diagram showing one example of a functional block of the MPU protection device according to the present example. As shown in the figure, an MPU protection device (1201) in the present example has a reference waveform holding unit (1202), an in-use power supply waveform acquisition unit (1203), a comparison unit (1204), a reference holding unit (1205) and an MPU operation stopping unit (1206). Features of the present example are in a content of the comparison unit. Therefore, the present example will be described, centering on a functional configuration of the comparison unit. In addition, the reference waveform holding unit, the in-use power supply waveform acquisition unit, the reference holding unit and the MPU operation stopping unit are similar to the units already described in Examples 1 and 2, and therefore the description thereon is omitted.

The "comparison unit" (1204) in the present example has a majority comparison means (1207). The "majority comparison means" means a function of comparing the identity by the majority of plural times of comparison results.

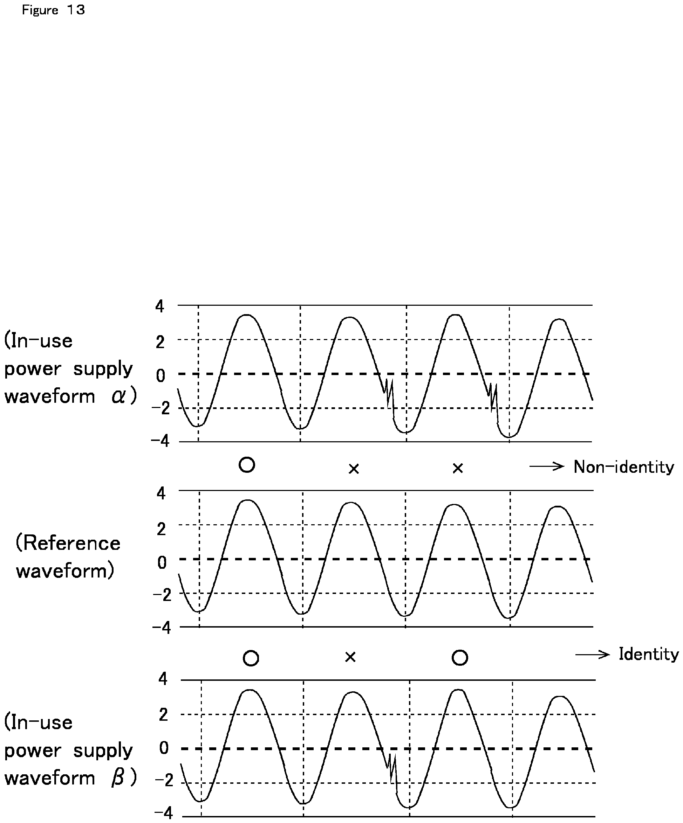

Figure 13 is a diagram showing a content of majority comparison. With regard to an in-use power supply waveform α, noise can be confirmed for two of three, and therefore both are determined to have non-identity. On the other hand, with regard to an in-use power supply waveform β, noise can be confirmed for one of three, but is unable to be confirmed for two, and therefore both are determined to have identity. When unauthorized access occurs, a change is ordinarily caused in the waveforms in the majority or more. Therefore, a case where the number of noise-generating waves is less than the majority is deemed as the waveform without depending on the unauthorized access, and determined to have identity. Thus, the unauthorized access can be reliably found out.

Moreover, the majority is not necessarily applied as the reference, and for example, if the noise is caused in 20% or more, the waveforms may be determined to have non-identity, or if the noise is caused in 30% or more, the waveforms may be determined to have non-identity. Then, the unit desirably has a function of automatically detecting what numerical value is to be applied as the reference. As the function, for example, the unit may have an exogenous noise measurement unit for measuring a quantity of electromagnetic wave noise under an environment in which an inspection target computer is placed. The function can be realized by an antenna for detecting the electromagnetic wave noise, for example.

Thus, erroneous determination in which a change in the waveform without depending on the unauthorized access is determined to be a change caused by the unauthorized access can be reduced, and presence or absence of the unauthorized access can determined with higher accuracy.

### Hardware configuration

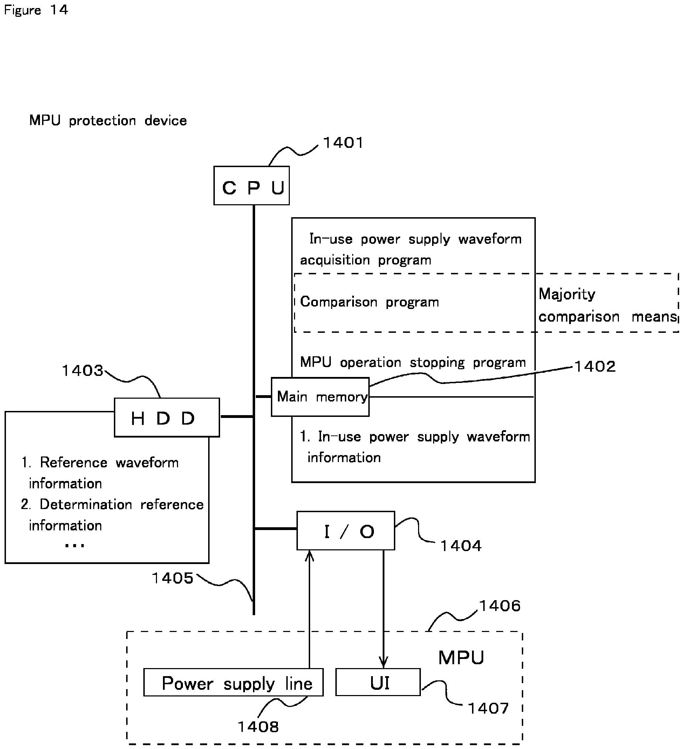

Figure 14 is a schematic diagram showing one example of a configuration in an MPU protection device upon realizing each functional component described above as hardware. The MPU protection device has a "CPU (central processing unit)" (1401), a "main memory" (1402), an "HDD" (1403), an "I/O (input/output)" (1404) and a "systembus" (1405), and an "MPU" (1406) being a protection object has a "UI" (1407) and a "power supply line" (1408).

Characteristic portions in Example 3 in each hardware configuration unit in each processing in the present device will be described by using the figure, and other portions are described in the same manner as in Examples 1 and 2.

As a content of a comparison program stored in the "main memory" (1402), the comparison program has a majority comparison means. Therefore, a content of comparison in the "CPU" (1401) should be the majority of plural times of comparisons.

Here, reference waveform information held in the "HDD" (1403) of the MPU protection device and in-use power supply waveform information acquired in the "I/O (input/output)" (1404) of the MPU protection device and stored in the main memory may be amplitude data, or may be waveform spectrum data.

### Flow of processing

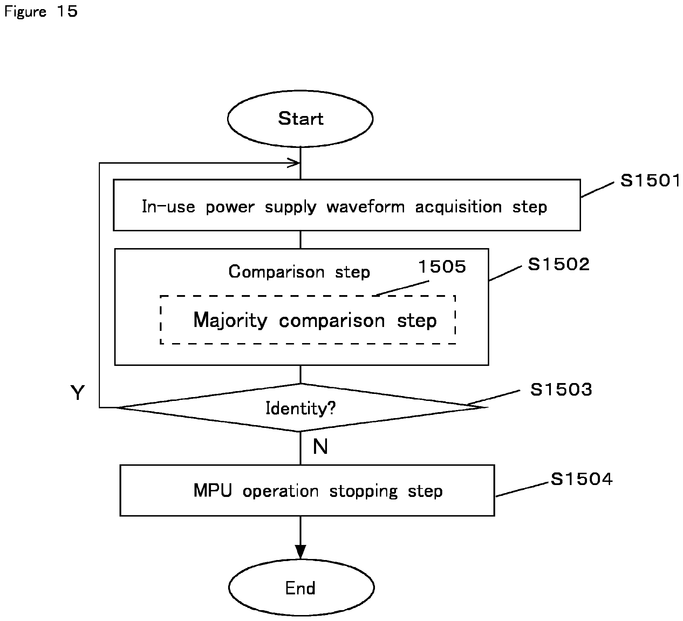

Figure 15 is a flow chart showing one example of a flow of processing in the MPU protection device according to the present example. The processing has an in-use power supply waveform acquisition step (S1501), a comparison step (S1502), confirmation of presence or absence of identity (S1503) and an MPU operation stopping step (S1504). Characteristic portions in Example 3 in the flow of each processing in the present device will be described by using the figure, and other portions are described in the same manner as in Examples 1 and 2.

The comparison step (S1502) has a majority comparison step. A "majority comparison step" (1505) means a step of comparing the identity by the majority of plural times of comparison results.

Thus, erroneous determination in which a change in the waveform without depending on the unauthorized access is determined to be a change caused by the unauthorized access can be reduced, and presence or absence of the unauthorized access can be determined with higher accuracy.

### Example 4

### Outline

As a further desirable embodiment, the present example provides, in addition to Example 1 or 3, an MPU protection device, wherein the reference waveform holding unit has a reference amplitude data holding means for holding reference amplitude data being amplitude data of a current or a voltage as power supply waveform data of an MPU, and the in-use power supply waveform acquisition unit has an in-use amplitude data acquisition means for acquiring in-use amplitude data being the amplitude data of the current or the voltage when using the MPU as the power supply waveform data when using the MPU, and the comparison unit has an amplitude data comparison means for comparing the in-use amplitude data with the reference amplitude data.

Hereinafter, a function of the device and a content of hardware, and a flow of processing according to the present example will be described in detail.

### Functional configuration

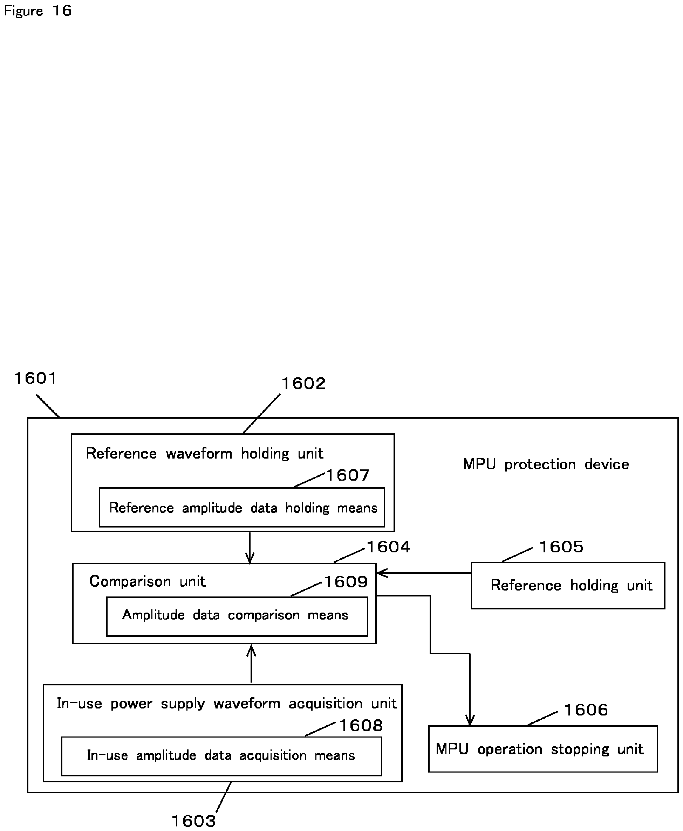

Figure 16 is a diagram showing one example of a functional block of the MPU protection device according to the present example. As shown in the figure, an MPU protection device (1601) in the present example has a reference waveform holding unit (1602), an in-use power supply waveform acquisition unit (1603), a comparison unit (1604), a reference holding unit (1605) and an MPU operation stopping unit (1606). Hereinafter, characteristic portions in Example 4 will be described, and other portions are described in the same manner as in Examples 1 to 3.

The "reference waveform holding unit" (1602) has a function of holding the power supply waveform data of the MPU as the reference. The reference waveform herein is the amplitude data of the current or the voltage. In the above case, the waveform information acquired in the "in-use power supply waveform acquisition unit" (1603) should be the amplitude data of the current or the voltage when using the MPU, and in the "comparison unit" (1604), the in-use amplitude data should be compared with the reference amplitude data.

In order to realize the function, the "reference waveform holding unit" has a reference amplitude data holding means (1607) for holding reference amplitude data being the amplitude data of the current or the voltage as the power supply waveform data of the MPU. Moreover, the "in-use power supply waveform acquisition unit" has an amplitude data acquisition means (1608) for acquiring in-use amplitude data being the amplitude data of the current or the voltage when using the MPU as the power supply waveform data when using the MPU. Further, the "comparison unit" has an amplitude data comparison means (1609) for comparing the in-use amplitude data with the reference amplitude data.

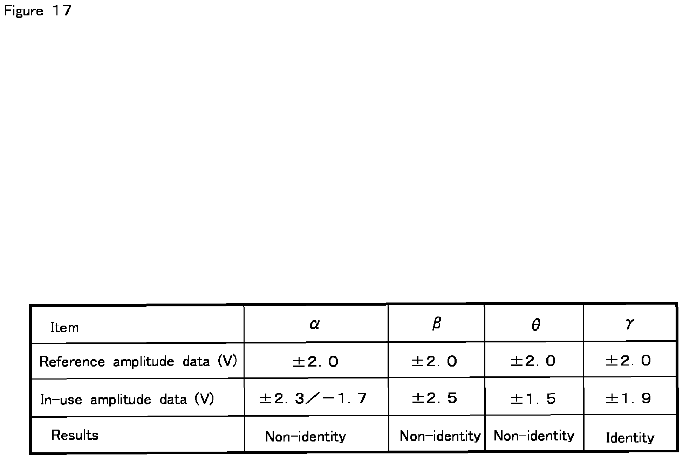

Figure 17 is a diagram showing a content of amplitude data and comparison results in the present example. For example, with regard to the reference held in the "reference holding unit", the present example will be described by applying the reference for determining both to have non-identity thereto in a case (1) where a rise or fall of center potential takes place in ±10% or more in comparison with the reference, or a case (2) where a change in length of amplitude takes place in ±10% or more in comparison with the reference.

According to Figure 17, the reference amplitude data are in the range of "±2.0" for all. In the above case, when the in-use amplitude data are "+2.3/-1.7", the rise or fall of center potential takes place in ±10% or more in comparison with the reference, and therefore the amplitude data have non-identity according to the reference (1). Moreover, when the in-use amplitude data are "±2.5", or when the in-use amplitude data are "±1.5", the change in length of amplitude takes place in ±10% or more in comparison with the reference, and therefore the amplitude data have non-identity according to the reference (2). On the other hand, when the in-use amplitude data are "±1.8", the amplitude data have identity in view of the references (1) and (2) described above. Thus, the identity of the amplitude data is determined.

Thus, unauthorized access influencing the power supply waveform in a form other than noise can be appropriately determined for such a case where the center potential rises or falls in comparison with the reference, or where an amplitude between an upper limit and a lower limit is expanded or reduced in comparison with the reference while the center potential has no change.

### Hardware configuration

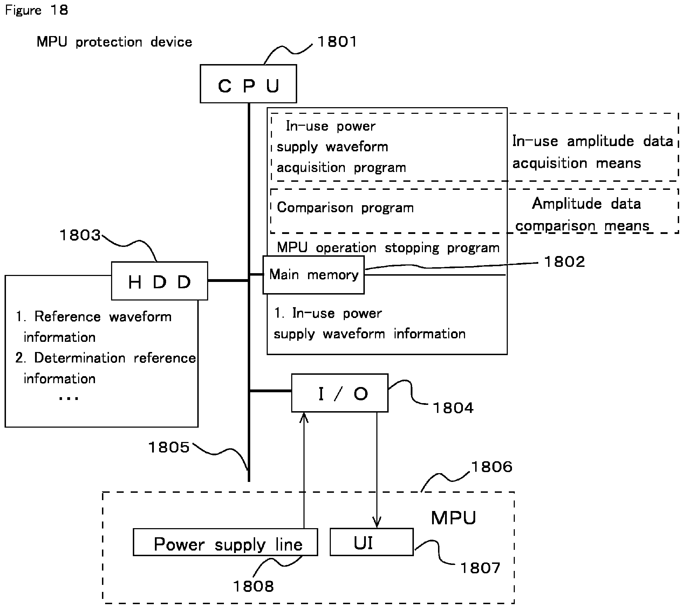

Figure 18 is a schematic diagram showing one example of a configuration in an MPU protection device upon realizing each functional component described above as hardware. The MPU protection device has a "CPU (central processing unit)" (1801), a "main memory" (1802), an "HDD" (1803), an "I/O (input/output)" (1804) and a "system bus" (1805), and an "MPU" (1806) being a protection object has a "UI" (1807) and a "power supply line" (1808).

Characteristic portions in Example 4 in each hardware configuration unit in each processing in the present device will be described by using the figure, and other portions are described in the same manner as in Examples 1 to 3.

Figure 18 shows a hardware configuration when the device has a reference amplitude data holding means, an in-use amplitude data acquisition means and an amplitude data comparison means. A content of a program stored in the "main memory" (1802) is an MPU operation stopping program, and also an in-use power supply waveform acquisition program having the in-use amplitude data acquisition means, and a comparison program having the amplitude data comparison means.

Therefore, a content of comparison in the "CPU" (1801) should be the comparison between the in-use amplitude data and the reference amplitude data. Moreover, the reference waveform information held in the "HDD" (1803) of the MPU protection device and the in-use waveform information acquired in the "I/O (input/output)" (1804) of the MPU protection device and stored in the main memory should be amplitude data for both.

### Flow of processing

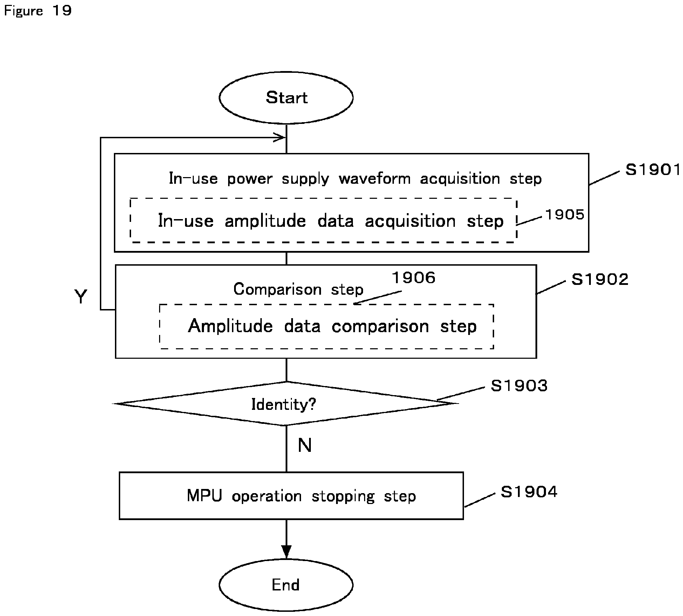

Figure 19 is a flow chart showing one example of a flow of processing in the MPU protection device according to the present example. Characteristic portions in Example 4 in the flow of each processing in the present device will be described by using the figure, and other portions are described in the same manner as in Examples 1 to 3.

The processing has an in-use power waveform acquisition step (S1901), a comparison step (S1902), confirmation of presence or absence of identity (S1903) and an MPU operation stopping step (S1904). In the above case, the MPU protection device to be used is provided on the premise of having the reference waveform holding unit having the reference amplitude data holding means.

The in-use power waveform acquisition step (S1901) in the present example has an in-use amplitude data acquisition step. An "in-use amplitude data acquisition step" (1905) means a step of acquiring the in-use amplitude data being the amplitude data of the current or the voltage when using the MPU as the power supply waveform data when using the MPU.

Moreover, the comparison step (S1902) in the present example has an amplitude data comparison step. An "amplitude data comparison step" (1906) means a step of comparing the in-use amplitude data with the reference amplitude data.

According to the steps described above, the unauthorized access influencing the power supply waveform in the form other than the noise can also be appropriately determined for such a case where the center potential rises or falls in comparison with the reference, or where the amplitude between the upper limit and the lower limit is expanded or reduced in comparison with the reference while the center potential has no change.

### Example 5

### Outline

Moreover, the present example provides an MPU protection device, wherein a signal waveform of an MPU is used in addition to the power supply waveform or in place of the power supply waveform in Examples 1 to 4.

Hereinafter, a function of the device and a content of hardware, and a flow of processing according to the present example will be described in detail.

### Functional configuration

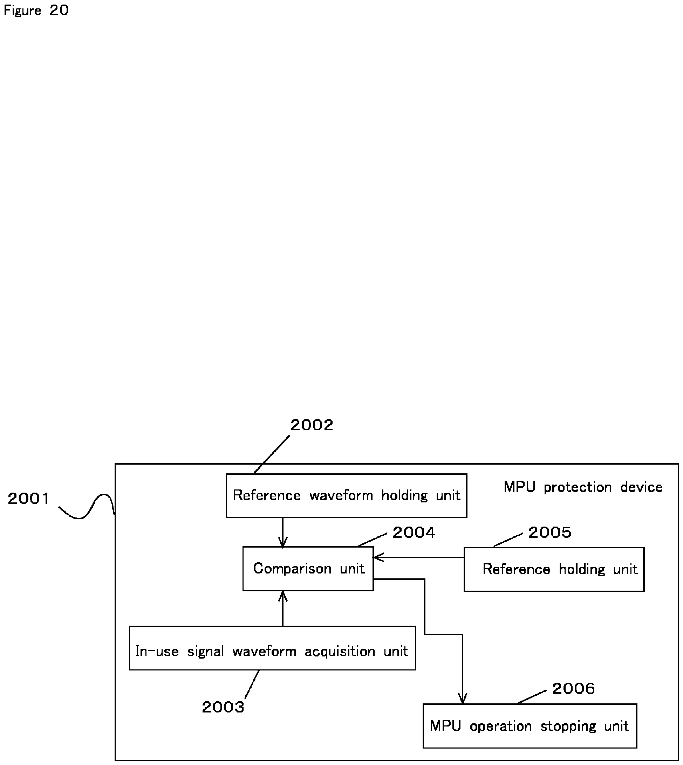

Figure 20 is a diagram showing one example of a functional block of an MPU protection device when the present invention is practiced in the signal waveform. An MPU protection device (2001) has a reference waveform holding unit (2002), an in-use signal waveform acquisition unit (2003), a comparison unit (2004), a reference holding unit (2005) and an MPU operation stopping unit (2006). Hereinafter, characteristic portions in Example 5 will be described, and other portions are described in the same manner as in Examples 1 to 4.

The "signal waveform" means the signal waveform such as a clock waveform to be supplied.

When such a configuration is taken, held reference waveform information and in-use power supply waveform information are only the signal waveform of the MPU, or the signal waveform and the power supply waveform of the MPU, and the waveforms should be compared in the comparison unit.

Thus, if a clock frequency signal waveform is used, for example, such unauthorized access as influencing a frequency can be reliably found out.

### Hardware configuration

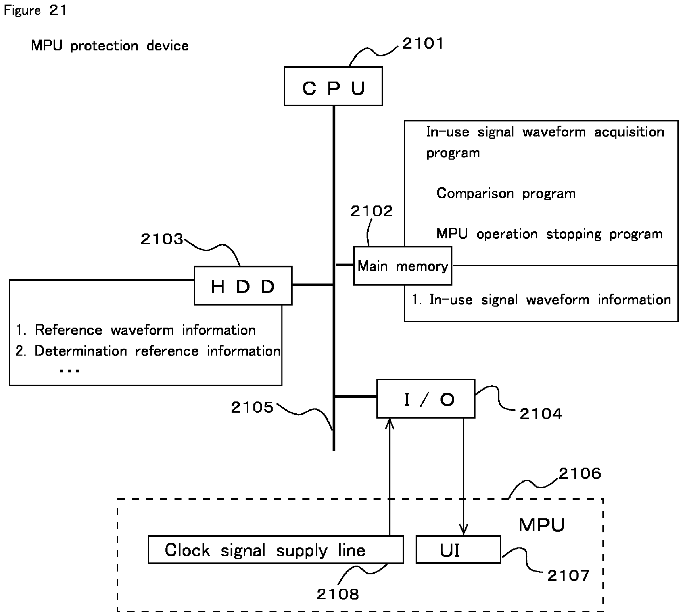

Figure 21 is a schematic diagram showing one example of a configuration in an MPU protection device upon realizing each functional component described above as hardware. The MPU protection device has a "CPU (central processing unit)" (2101), a "main memory" (2102), an "HDD" (2103), an "I/O (input/output)" (2104) and a "system bus" (2105), and an "MPU" (2106) being a protection object has a "UI" (2107) and a "clock signal supply line" (2108).

Characteristic portions in Example 5 in each hardware configuration unit in each processing in the present device will be described by using the figure, and other portions are described in the same manner as in Examples 1 to 4.

A content of comparison in the "CPU" (2101) should be the comparison between reference signal waveform information and in-use signal waveform information.

Therefore, programs stored in the "main memory" should be an MPU operation stopping program, and also an in-use signal waveform acquisition program, and a comparison program for comparing the in-use signal waveform information with the reference signal waveform information. Moreover, the reference waveform information held in the "HDD" (2103) of the MPU protection device and the in-use waveform information acquired in the "I/O (input/output)" (2104) of the MPU protection device and stored in the main memory should be signal waveform information for all.

### Flow of processing

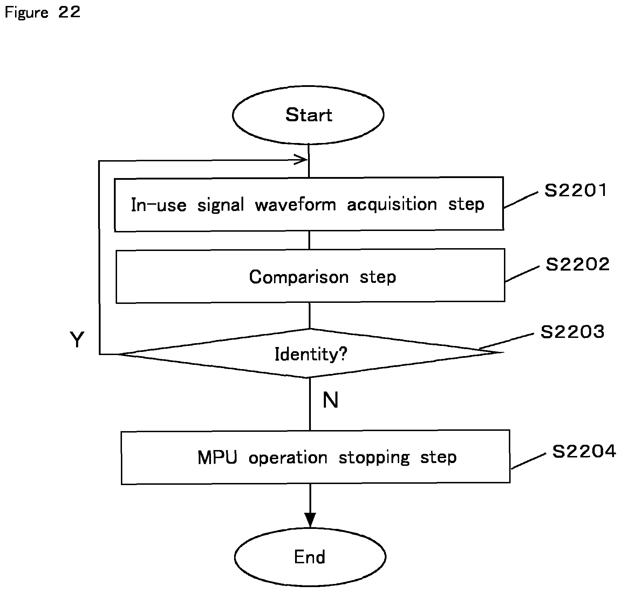

Figure 22 is a flow chart showing one example of a flow of processing in the MPU protection device according to the present example. Characteristic portions in Example 5 in the flow of each processing in the present device will be described by using the figure, and other portions are described in the same manner as in Examples 1 to 4.

First, an in-use signal waveform is acquired from an MPU protection device (S2201). Then, identity between the acquired in-use signal waveform (such as a clock frequency signal) and the held reference waveform (such as the clock frequency signal) is compared (S2202). As a result, when both waveforms are determined to have non-identity in comparison results using the held reference (S2203), at least a part of MPU operation is stopped (S2204). On the other hand, when both waveforms are determined to have identity in the comparison results using the held reference (S2203), the processing returns to the step of acquiring the in-use signal waveform being a signal waveform when using the MPU (S2201) .

As the premise of comparing the waveforms by the signal waveform, the waveform information held in the reference waveform holding unit of the MPU protection device should be signal waveform information (such as the clock frequency signal), and the waveform information acquired in the in-use signal waveform acquisition step (S2201) also should be the signal waveform information (such as the clock frequency signal).

Thus, if the clock frequency signal waveform is used, for example, such unauthorized access as influencing a frequency can be reliably found out.

### Example 6

### Outline

As a further desirable embodiment, the present invention provides, in addition to Examples 1 to 5, an MPU protection device having a non-normal operation unit that allows an MPU to intentionally perform wrong operation and/or dummy operation after stopping in an MPU operation stopping unit when both waveforms are determined to have non-identity in comparison results using a held reference in a comparison unit.

Hereinafter, a function of the device and a content of hardware, and a flow of processing according to the present example will be described in detail.

### Functional configuration

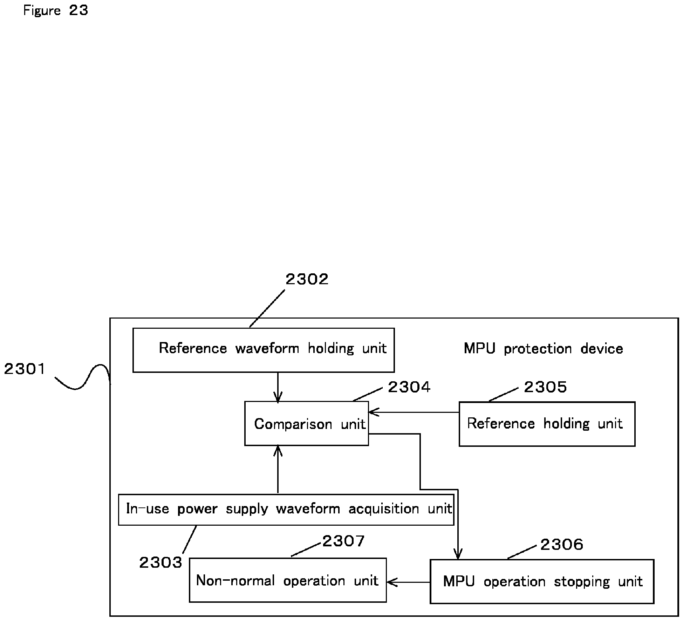

Figure 23 is a diagram showing one example of a functional block of the MPU protection device according to the present example. As shown in the figure, an MPU protection device (2301) in the present example has a reference waveform holding unit (2302), an in-use power supply waveform acquisition unit (2303), a comparison unit (2304) and a reference holding unit (2305) . Features of the present example are in having a non-normal operation unit (2307) in addition to an MPU operation stopping unit (2306) . Therefore, the present example will be described, centering on a functional configuration of the non-normal operation unit. In addition, the reference holding unit, the in-use power supply waveform acquisition unit, the comparison unit, the reference holding unit and the MPU operation stopping unit are similar to the units already described in Examples 1 to 5, and therefore the description thereon is omitted.

The "non-normal operation unit" has a function of allowing the MPU to intentionally perform wrong operation and/or dummy operation after stopping in the MPU operation stopping unit when both waveforms are determined to have non-identity in comparison results using held reference in the comparison unit. Specifically, the unit allows the MPU to perform wrong operation by providing the MPU being a protection object with a compulsive interrupt command. Moreover, the unit may allow the MPU to perform wrong operation by replacing a program counter of the MPU being the protection object.

A certain level of damage can be caused to a person who commits unauthorized access by having the function as described above, leading to suppression of committing such unauthorized access.

### Hardware configuration

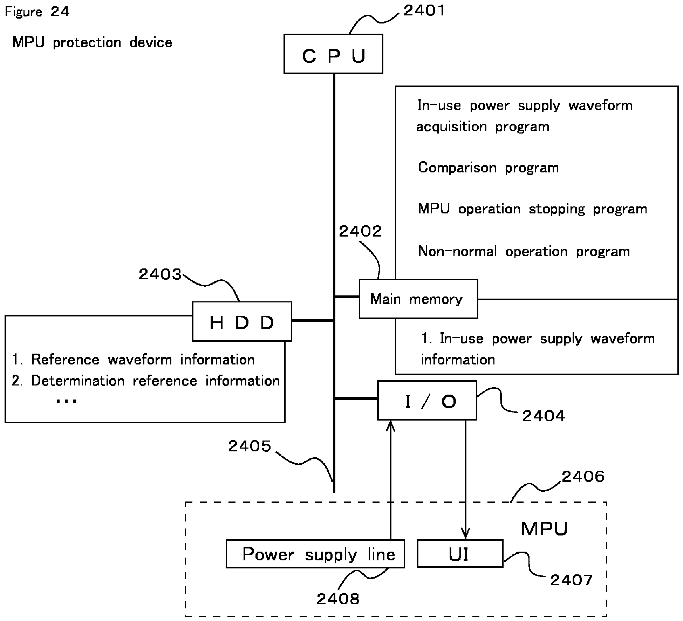

Figure 24 is a schematic diagram showing one example of a configuration in an MPU protection device upon realizing each functional component described above as hardware. The MPU protection device has a "CPU (central processing unit)" (2401), a "main memory" (2402), an "HDD" (2403), an "I/O (input/output)" (2404) and a "system bus" (2405), and an "MPU" (2406) being the protection object has a "UI" (2407) and a "power supply line" (2408).

Characteristic portions in Example 6 in each hardware configuration unit in each processing in the present device will be described by using the figure, and other portions are described in the same manner as in Examples 1 to 5.

Programs stored in the "main memory" of the MPU protection device according to the present example are an in-use power supply waveform acquisition program, a comparison program, an MPU operation stopping program, and also a non-normal operation program. The "non-normal operation program" means the program of allowing the MPU to intentionally perform wrong operation and/or dummy operation.

Therefore, in the "CPU", an acquired in-use power supply waveform is compared with a reference waveform preliminarily held in the "HDD", presence or absence of identity is determined by using a determination reference preliminarily held in the "HDD", and if both are determined to have non-identity, an OFF signal is transmitted to a "UI" (2407) of an "MPU" (2406) according to logic operation processing in the "CPU", and then a wrong operation and/or dummy operation execution signal is transmitted thereto. Specifically, the wrong operation and/or dummy operation execution signal means the compulsive interrupt command or replacement of the program counter.

In the MPU (2406), if the OFF signal and the wrong operation and/or dummy operation execution signal are received, a part or whole of supply of a power supply signal is stopped and supply of an improper power supply signal is started.

### Flow of processing

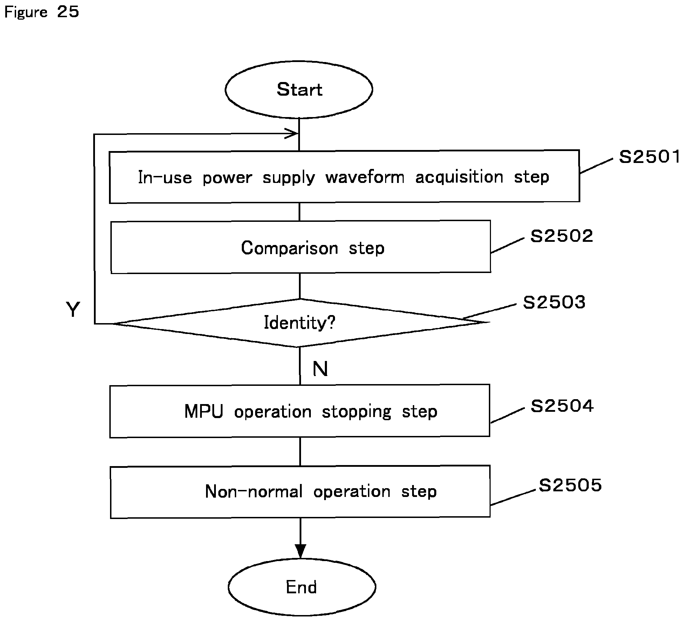

Figure 25 is a flow chart showing one example of a flow of processing in the MPU protection device according to the present example. The processing has an in-use power supply waveform acquisition step (S2501), a comparison step (S2502), confirmation of presence or absence of identity (S2503) and an MPU operation stopping step (S2504). Characteristic portions in Example 6 in the flow of each processing in the present device will be described by using the figure, and other portions are described in the same manner as in Examples 1 to 5.

In the present example, a non-normal operation step (S2505) exists after the MPU operation stopping step (S2504) . The "non-normal operation step" means processing of allowing the MPU to intentionally perform wrong operation and/or dummy operation.

Thus, a certain level of damage can be caused to a person who commits unauthorized access, leading to suppression of committing such unauthorized access.

### Example 7

The present example provides electronic equipment equipped with an MPU protection device having the features in Examples 1 to 6 as extension of embodiments in Examples 1 to 6. Moreover, the present example provides a protection method for electronic equipment, using the MPU protection method having the features in Examples 1 to 6, also as the protection method for electronic equipment. More specifically, the feature of the present example is in integrating the MPU protection device or the MPU protection method in Examples 1 to 6 each with the electronic equipment or the protection method for electronic equipment. A functional configuration, a hardware configuration and a flow of processing of the MPU protection device are provided in the same manner as in Examples 1 to 6 for all.

According to the electronic equipment in the present example, the electronic equipment having a function for preventing even unauthorized access without using a debug terminal can be provided. Moreover, according to the MPU protection method in the present example, the electronic equipment that is liable to receive the unauthorized access without using the debug terminal can be protected.

### Reference Signs List

0101, 0801, 1201, 1601, 2001, 2301: MPU protection device
0102, 0802, 1202, 1602, 2002, 2302: Reference waveform holding unit
0103, 0803, 1203, 1603, 2303: In-use power supply waveform acquisition unit
0104, 0804, 1204, 1604, 2004, 2304: Comparison unit
0105, 0805, 1205, 1605, 2005, 2305: Reference holding unit
0106, 0806, 1206, 1606, 2006, 2306: MPU operation stopping unit
0807: Spectrum comparison means
1207: Majority comparison means
1607: Reference amplitude data holding means
1608: In-use amplitude data acquisition means
1609: Amplitude data comparison means
2003: In-use signal waveform acquisition unit
2307: Non-normal operation unit

## Claims

1. An MPU protection device, comprising:
a reference waveform holding unit that holds power supply waveform data of an MPU as a reference;
an in-use power supply waveform acquisition unit that acquires an in-use power supply waveform being a power supply waveform when using the MPU;
a comparison unit that compares identity between the acquired in-use power supply waveform and the held reference waveform;
a reference holding unit that holds a reference for determining both to have identity and/or non-identity; and
an MPU operation stopping unit for stopping at least a part of MPU operation when both waveforms are determined to have non-identity in comparison results using the held reference in the comparison unit.

2. The MPU protection device according to claim 1, wherein the comparison unit has a spectrum comparison means for comparing the identity by spectrum comparison.

3. The MPU protection device according to claim 1 or 2, wherein the comparison unit has a majority comparison means for comparing the identity by a majority of plural times of comparison results.

4. The MPU protection device according to claim 1 or claim 3 dependent on claim 1, wherein
the reference waveform holding unit has a reference amplitude data holding means for holding reference amplitude data being amplitude data of a current or a voltage as power supply waveform data of the MPU,
the in-use power supply waveform acquisition unit has an in-use amplitude data acquisition means for acquiring in-use amplitude waveform data being the amplitude data of the current or the voltage when using the MPU as the power supply waveform data when using the MPU, and
the comparison unit has an amplitude data comparison means for comparing the in-use amplitude data with the reference amplitude data.

5. The MPU protection device according to any one of claims 1 to 4, further comprising a non-normal operation unit that allows the MPU to intentionally perform wrong operation and/or dummy operation after stopping in the MPU operation stopping unit when both waveforms are determined to have non-identity in the comparison results using the held reference in the comparison unit.

6. The MPU protection device according to any one of claims 1 to 5, wherein the reference waveform is a waveform of electronic equipment including the MPU upon factory shipping thereof.

7. The MPU protection device according to any one of claims 1 to 5, wherein the reference waveform is a waveform of the electronic equipment including the MPU during start of use thereof.

8. The MPU protection device according to any one of claims 1 to 7, wherein a signal waveform of the MPU is applied in addition to the power supply waveform or in place of the power supply waveform.

9. Electronic equipment, comprising the MPU protection device according to any one of claims 1 to 8.

10. An MPU protection method, being an operation method for an MPU protection device comprising:
a reference waveform holding unit that holds power supply waveform data of an MPU as a reference; and
a reference holding unit that holds a reference for determining both to have identity and/or non-identity between an in-use power supply waveform being a power supply waveform when using the MPU as described later and the held reference waveform,
and the operation method, comprising:
an in-use power supply waveform acquisition step of acquiring the in-use power supply waveform being the power supply waveform when using the MPU;
a comparison step of comparing identity between the in-use power supply waveform acquired in the in-use power supply waveform acquisition step and the held reference waveform; and
an MPU operation stopping step of stopping at least a part of MPU operation when both waveforms are determined to have non-identity in comparison results using the held reference in the comparison step.

11. The MPU protection method according to claim 10, wherein the comparison step has a spectrum comparison means for comparing the identity by spectrum comparison.

12. The MPU protection method according to claim 10 or 11, wherein the comparison step has a majority comparison means for comparing the identity by a majority of plural times of comparison results.

13. The MPU protection method according to claim 10 or claim 12 dependent on claim 10, wherein
the reference waveform holding unit has a reference amplitude data holding means for holding reference amplitude data being amplitude data of a current or a voltage as the power supply waveform data of the MPU,
the in-use power supply waveform acquisition step has an in-use amplitude data acquisition means for acquiring in-use amplitude waveform data being amplitude data of a current or a voltage when using the MPU as the power supply waveform data when using the MPU, and
the comparison step has an amplitude data comparison means for comparing the in-use amplitude data with the reference amplitude data.

14. The MPU protection method according to any one of claims 10 to 13, further comprising a non-normal operation step of allowing the MPU to intentionally perform wrong operation and/or dummy operation after stopping in the MPU operation stopping step when both waveforms are determined to have non-identity in the comparison results using the held reference in the comparison unit.

15. The MPU protection method according to any one of claims 10 to 13, wherein the reference waveform is a waveform of electronic equipment including the MPU upon factory shipping thereof.

16. The MPU protection method according to any one of claims 10 to 15, wherein the reference waveform is a waveform of the electronic equipment including the MPU during start of first use after purchase thereof.

17. The MPU protection method according to any one of claims 10 to 16, wherein a signal waveform of the MPU is applied in addition to the power supply waveform or in place of the power supply waveform.

18. A protection method for electronic equipment, using the MPU protection method according to any one of claims 10 to 17.
